# EUROPÄISCHE PATENTSCHRIFT

(11) **EP 1 724 321 B1**
(45) Veröffentlichungstag und Bekanntmachung des Hinweises auf die Patenterteilung: **08.07.2009**
(21) Anmeldenummer: 06009739.1
(22) Anmeldetag: 11.05.2006
(51) Int. Cl.: C09J 201/10, C09J 201/00

(54) **Lösungsmittelfreier Kleb-und Dichtstoff**
Solventless adhesive and sealant
Agents adhésif et d'étancheité ne contenant pas de solvent

(30) Priorität: 17.05.2005 DE 102005023319
(43) Veröffentlichungstag der Anmeldung: 22.11.2006
(73) Patentinhaber: Den Braven Sealants bv, 4903 RC Oosterhout (NL)
(72) Erfinder: den Braven, Cornelius, 2970's Gravenwezel (BE); Wunram, Heinz-Peter, 51580 Reichshof (DE)
(74) Vertreter: Binsack, Beate

(56) Entgegenhaltungen:
- EP-A- 1 046 676
- WO-A-20/05066283
- US-A- 5 391 610
- US-A- 6 121 354
- US-B1- 6 355 317

## Beschreibung

Die Erfindung betrifft einen im Wesentlichen lösungsmittelfreien Kleb- und Dichtstoff auf der Basis mindestens eines wasserfreien natürlichen oder synthetischen Harzes, das Verfahren zu seiner Herstellung sowie seine Verwendung zum Verkleben und Abdichten.

Kleb- und Dichtstoffe werden im Baubereich in großem Umfang eingesetzt. Besonders gefragt sind Stoffe, die wegen ihrer guten Haftung sowohl als Klebstoffe wie auch als Dichtstoffe eingesetzt werden können.

Hierzu sind im Stand der Technik eine Vielzahl von Kleb- und Dichtstoffen bekannt. In der Regel sind diese Kleb- und Dichtstoffe lösungsmittel- und/oder wasserhaltig. Die Kleb- und Dichtstoffe nach dem Stand der Technik entfalten ihre adhäsiven Eigenschaften und Festigkeiten erst nach dem Verdampfen der Lösungsmittel bzw. der wässerigen Phase. Erst danach dürfen die beiden Fügeteile einer Belastung ausgesetzt werden.

Die lösungsmittelhaltigen Kleb- und Dichtstoffe haben den Nachteil, dass flüchtige organische Verbindungen (VOC) freigesetzt werden und die Umwelt und die Gesundheit belasten.

Nachteilig bei den Kleb- und Dichtstoffe auf wässeriger Basis ist, dass sie zum Abbinden längere Zeiten oder mehr Energie benötigen. Darüber hinaus sind sie aufgrund der wässrigen Mobilphase frostempfindlich, was auch durch Zusatzstoffe nur zum Teil kompensiert werden kann. Bei ungünstigen Witterungsverhältnissen kann der Abbindeprozess stark verzögert werden.

Die US 5,391,610 beschreibt extrudierbare thermoplastische Zusammensetzungen, die für Abdichtungen geeignet sind und die ein Elastomer und ein oligomeres Prepolymer mit durchschnittlich zwei oder mehr terminalen Isocyanat- oder Silylgruppen enthalten. Als Elastomere werden unter anderem Polybuten, Polyisobuten, Polysulfid, Polyisopren, Polybutadien und Polyacrylat aufgeführt und als Prepolymere werden beispielsweise Polyester, Polyether, Polybutadien, Ethylen-Vinylacetat, Ethylen-Propylen-Dien-Kautschuke genannt. Diese Zusammensetzungen bilden nach Aushärtung mittels Feuchtigkeit als Dichtungen geeignete elastomere Netzwerke.

Eine neuere Patentanmeldung (DE 100 00 940 Al) beschreibt eine Dichtmasse auf der Basis einer wässerigen Dispersion von Vinylpolymeren, die im Wesentlichen frei von flüchtigen organischen Verbindungen (VOC) und die im Trockenzustand selbstklebend ist. Diese kann auch im Baubereich eingesetzt werden. Allerdings handelt es sich hierbei um eine Dichtmasse auf Wasserbasis, d.h. bei der Trocknung treten Wasserdämpfe aus, die die Luftfeuchtigkeit erhöhen.

Der Erfindung liegt daher die Aufgabe zugrunde, einen Kleb- und Dichtstoff, insbesondere für den Baubereich, zur Verfügung zu stellen, der frei oder in Wesentlichen frei von flüchtigen, die Umwelt belastenden Stoffen ist. Darüber hinaus soll der soll der Kleb- und Dichtstoff schon zu Beginn der Anwendung eine hohe Adhäsivkraft haben und nicht die für wässerige Dispersionen typische Frostempfindlichkeit zeigen.

Diese Aufgabe wird erfindungsgemäß durch die kennzeichnenden Merkmale des Hauptanspruchs und der nebengeordneten Ansprüche gelöst. Bevorzugte Ausführungsformen der Erfindung sind in den Unteransprüchen und der nachfolgenden Beschreibung definiert.

Die Erfindung zeichnet sich dadurch aus, dass ein im Wesentlichen lösungsmittelfreier Kleb- und Dichtstoff auf der Basis von mindestens einem lösungsmittel- und wasserfreien Harz und mindestens einer durch Feuchtigkeitseinwirkung aushärtenden Komponente zum Verkleben von Kunststoffen, insbesondere Folien, Holz, Papier, Pappe, Tapeten, Leder, Filz, Kork, Textilien und/oder Metallen sowie die mit dem erfindungsgemäßen Kleb- und Dichtstoff beschichteten bzw. verklebten Materialien bereit gestellt wird.

Vorzugsweise ist die durch Feuchtigkeitseinwirkung aushärtende Komponente mindestens ein Prepolymer mit Gruppen, die durch Feuchtigkeit, insbesondere Umgebungs- bzw. Luftfeuchte, vernetzen, d.h. aushärten.

Der erfindungsgemäße Kleb- und Dichtstoff ist selbstklebend und härtet nach der Auftragung ohne Lösungsmittel- oder Wasserausdünstungen aus. Er ist damit sehr gut geeignet, sowohl bei Altbausanierungen wie auch bei Neubauten beispielsweise zum Festkleben der Dampfsperrfolien und anderer Folien verwendet zu werden. Auch eine Verwendung in sehr feuchten Räumen ist denkbar. Denn auch in gut abgedichteten bzw. feuchten Räumen treten so gut wie keine Feuchtigkeitsausscheidungen auf.

Des Weiteren ist der erfindungsgemäße Kleb- und Dichtstoff umweltfreundlich, da er im Wesentlichen frei von flüchtigen, die Umwelt belastenden Stoffen ist.

Nach dem Aushärten bildet der erfindungsgemäße Kleb- und Dichtstoff eine hochviskose, elastische Masse. Das Aushärten erfolgt in der Regel mittels Luftfeuchtigkeit. Dadurch kommt es insbesondere in Neubauten zu einer Verringerung der Luftfeuchtigkeit in geschlossenen Räumen, was beispielsweise beim Trocknen des Estrichs oder in Räumen mit sehr hoher Luftfeuchtigkeit von Vorteil ist.

Darüber hinaus weist der erfindungsgemäße Kleb- und Dichtstoff schon zu Beginn der Anwendung eine hohe Adhäsivkraft auf und zeigt nicht die für wässerige Dispersionen typische Frostempfindlichkeit.

Als erfindungsgemäße Prepolymere eignen sich alle Prepolymere mit durch Feuchtigkeit hydrolisierenden oder vernetzenden Gruppen. Hierzu geeignet sind Prepolymere, die ausgewählt sind aus der Gruppe Polyurethan-Prepolymere, Polyether-Prepolymere, Polyolefin-Prepolymere, Polybutadien-Prepolymere, Polyisopren-Prepolymere, Poly-Styrol-Butadien-Prepolymere, Polychloropren-Prepolymere, Poly-Acrylnitril-Butadien-Prepolymere, Polysilikon-Prepolymere und thermoplastische Elastomer-Prepolymere, die ohne Vulkanisation durch Spritzguss geformt werden können. Vorzugsweise enthält der erfindungsgemäße Kleb- und Dichtstoff Polyurethan-, Polyether- und/oder Polyolefin-Prepolymere. Ohne Einschränkung der Allgemeinheit besonders geeignet sind beispielsweise das Polyether-Prepolymer KANEKA SILYL SAX400 der Kaneka Belgium N.V., die Polyurethan-Prepolymere POLYMER ST 67, POLYMER ST 65 und POLYMER ST 61 der Hanse Chemie AG und das Prepolymer Baycoll XP 2458 der Bayer AG.

In einer bevorzugten Ausführungsform ist das mindestens eine Prepolymer des erfindungsgemäßen Kleb- und Dichtstoffes silyl-terminiert.

Der erfindungsgemäße Kleb- und Dichtstoff weist bevorzugt einen Gehalt von 1 bis 40 Gew.-%, besonders bevorzugt 1 bis 30 Gew.-%, ganz besonders bevorzugt 5 bis 15 Gew.-%, des mindestens einen Prepolymers bezogen auf den fertigen Kleb- und Dichtstoff auf.

Die im erfindungsgemäßen Kleb- und Dichtstoff vorhandenen wasser- und lösungsmittelfreien Harze können natürlich oder synthetisch (Kunstharze) und modifiziert oder unmodifiziert sein. Dabei werden eingesetzt Acryl-, Alkyd-, Epoxid-, Polyurethan- und/oder Polyvinylacatat-Harze. Besonders bevorzugt enthält der erfindungsgemäße Kleb- und Dichtstoff Acryl-, Epoxid- und Alkydharze. Alternativ besonders bevorzugt sind Polybutene, Polyisobutene und hydroxylierte Polyesterharze. Ohne Einschränkung der Allgemeinheit sind ganz besonders bevorzugte Bespiele für erfindungsgemäße Harze das AC Resin DS 3500 und das Acronal 4F der BASF AG sowie die hydroxylierten Polyesterharze Halwepol PE 45 und Habo-pol VP E 450. Es sind aber auch alle anderen in Klebstoffen und Dichtmassen üblichen Harze erfindungsgemäß geeignet.

Der erfindungsgemäße Kleb- und Dichtstoff weist bevorzugt einen Gehalt von 10 bis 80 Gew.-%, besonders bevorzugt 20 bis 80 Gew.-% und ganz besonders bevorzugt 40 bis 50 Gew.-%, des mindestens einen Harzes bezogen auf den fertigen Kleb- und Dichtstoff auf.

Das Verhältnis von Prepolymer zu Harz im erfindungsgemäßen Kleb- und Dichtstoff beträgt idealerweise 1:3 bis 1:6, bevorzugt 1:4 bis 1:5, bezogen auf Gewichtsanteile im fertigen Kleb- und Dichtstoff.

Der erfindungsgemäße Kleb- und Dichtstoff kann einen oder mehrere Zusatzstoffe enthalten, die ausgewählt sind aus anorganischen Füllstoffen, organischen Füllstoffen, Weichmachern, Tackifiern, oligomeren Füllstoffen, polymeren Füllstoffen, Rheologie-Modifikatoren, wie zum Beispiel Verdickern oder Tixotropiermitteln, Vernetzern, Haftvermittlern, Stabilisatoren und Farbstoffen. Die Zusatzstoffe können alleine oder als Gemische vorhanden sein. Sie liegen in folgenden Mengen im erfindungsgemäßen Kleb- und Dichtstoff vor jeweils bezogen auf 100 Gewichtsteile fertigen Kleb- und Dichtstoffes: 0 bis 80 Gew.-% anorganische und/oder organische Füllstoffe, 0 bis 60 Gew.-% Weichmacher, 0 bis 60 Gew.-% Tackifier, 0 bis 80 Gew.-% oligomere und/oder polymere Füllstoffe, 0 bis 20 Gew.-% Rheologie-Modifikatoren, 0 bis 15 Gew.-% Vernetzer, 0 bis 10 Gew.-% Haftvermittler und 0 bis 15 Gew.-% Stabilisatoren.

Bei den jeweiligen Zusatzstoffen handelt es sich um dem Fachmann bekannte Zusatzstoffe, dessen Auswahl dem Fachmann keinerlei Schwierigkeiten bereitet.

In einer bevorzugten Ausführungsform enthält der erfindungsgemäße Kleb- und Dichtstoff einen Vernetzer und/oder einen Härter, der mit Umgebungsfeuchte den Kleb- und Dichtstoff aushärtet. Bevorzugt führt er die notwendige Festigkeit für den erfindungsgemäßen Kleb- und Dichtstoff mittels einer chemischen Reaktion mit der Umgebungs- bzw. Luftfeuchtigkeit herbei.

Bevorzugte Vernetzer sind Verbindungen, die durch Feuchtigkeit hydrolisierbare und/oder vernetzende Gruppen enthalten. Dies können niedermolekulare Verbindungen und/oder Prepolymere sein. Besonders bevorzugte Vernetzer sind primäre, sekundäre oder tertiäre Aminoverbindungen, die gegebenenfalls auch Vernetzergruppen enthalten können. Ohne Einschränkung der Allgemeinheit sind erfindungsgemäß bevorzugte Vernetzer beispielsweise die folgenden Aminosilane γ-Aminopropyltriethoxysilan (A-1100, GE Advanced Materials), -γ-Aminopropyltrimethoxysilan (A-1110, GE Advanced Materials), N-(β-Aminoethyl)-γ-aminopropyl-trimethoxysilan (A-1120, GE Advanced Materials), Bis-[γ-(trimethoxysilyl)propyl]amin (A-1170/Y-9627, GE Advanced Materials), 4-Amino-3,3-dimethyl-butyl-trimethoxysilan (A-1637/Y-11637, GE Advanced Materials), γ-Aminopropyl-methyl-diethoxysilan (A-2100, GE Advanced Materials).

Mit Füllstoffen anorganischer oder organischer Natur kann die Thixotropie, Härte bzw. Festigkeit des erfindungsgemäßen Kleb- und Dichtstoffes eingestellt werden.

Ohne Einschränkung der Allgemeinheit bevorzugte anorganische Füllstoffe sind Quarzmehl, gefälltes oder natürliches Bariumsulfat, Titandioxid, gefälltes oder natürliches Calciumcarbonat (zum Beispiel Kreide), gefälltes oder natürliches Kaolin, Talkum, Magnesium- oder Aluminiumhydroxid (letztere Hydroxide erlauben eine Einstellung der Brandklasse), Zinkoxid, Zirkoniumsalze, Glaskugeln oder Mikrohohlkugeln aller Art.

Bevorzugte organische Füllstoffe sind beispielsweise Harze auf Kohlenwasserstoff- oder Kolophoniurnbasis, Tallharz, Balsamharz, Terpene, Oligomere, wie zum Beipiel Butylene, Acrylate oder andere Vinylbasierte Moleküle mit einem relativ niedrigen Molekulargewicht, Urethane oder Ester mit relativ niedrigem Molekulargewicht oder polymere Weichmacher auf Polyesterbasis, z. B. Benzoflex. Als organische Füllstoffe sind auch polymere Füllstoffe geeignet, wie zum Beispiel Schlagzähmodifikatoren, Kunststofffasern oder Kunststoffpulver aus zum Beispiel Polyacrylaten, Polystyrol, Polyester, Polyamid, Polyurethan, Polyvinylchlorid, Polyolefinen, Polyvinylacetat, Polyisopren oder Poly(iso)butylen, sowie Blockcopolymere davon.

Durch den Zusatz von für Dichtstoffen typischen Haftmitteln kann die Haftung des erfindungsgemäßen Dicht- und Klebstoffes auf Untergründen verstärkt werden. Die Haftmittel können bifunktionell sein, indem sie als strukturelle Merkmale sowohl die Haftung verstärkende Gruppen wie beispielsweise Aminogruppen als auch Vernetzergruppen wie beispielsweise vernetzende Silangruppen enthalten.

Bei den Weichmachern handelt es sich gemäß DIN 55 945 um flüssige oder feste indifferente organische Substanzen mit geringem Dampfdruck. Aufgrund ihres Löse- und Quellvermögens verringern sie die Härte des Harzes und des Prepolymeren bzw. des aus dem Prepolymer entstandenen elastomeren Makromoleküls und ändern sein Haftvermögen. Geeignete Weichmacher sind beispielsweise Phthalate, Adipate, Citrate, Phosphate, Trimellithsäure oder Sulfonsäure.

Bei den Tackifiern handelt es sich vorzugsweise um Kolophonium- oder Kohlenwasserstoff-basierte Harze.

Bevorzugte Rheologie-Modifikatoren sind Polyurethan-Verdicker, Acrylat-Verdicker, Cellulose-Verdicker, Polyvinylalkohol-Verdicker, Silikate, Vinylether-/Maleinsäureanhydrid oder Polyethylenoxid.

Bevorzugte Stabilisatoren sind sterisch gehinderte Phenole, wie zum Beispiel Irganox 110, Antioxidant 330 oder Cyanox 2246, die zur Erhöhung der Temperaturstabilität eingesetzt werden, und sterisch gehinderte Phenole und/oder sterisch gehinderte Amine, wie Irganox 1076 oder 1010, Tinuvin P, Tinovin 326 oder 770, oder Antioxidant 330, oder modifizierte Titandioxide, die zur Erhöhung der UV-Beständigkeit verwendet werden.

Daneben kann die erfindungsgemäße Dichtmasse noch weitere übliche Zusatzstoffe enthalten, beispielsweise Biozide (Konservierungsstoffe) oder Farbstoffe. Insbesondere mit Pigmenten ist eine Farbgebung der erfindungsgemäßen Dicht- und Klebmasse gut möglich.

Stabilisatoren werden insbesondere dann eingesetzt, wenn Acrylatbasierte Vinylpolymere mit aliphatischen Monomeren, wie z. B. Vinylacetat oder Butadien, oder aromatischen Monomeren, z. B. Styrol oder Vinylbenzol, verwendet werden. Darüber hinaus ist es bei Verwendung von nicht-hydrierten Tackifiern bevorzugt, eine zusätzliche Menge an Stabilisatoren zuzusetzen, um die gewünschte Alterungsbeständigkeit zu erreichen.

Den Tackifiern, oligomeren Füllstoffen und weiteren organischen Füllstoffen kommt die Aufgabe zu, die Selbstklebrigkeit, Kohäsion und Wasserbeständigkeit des Kleb- und Dichtstoffes zu verbessern.

Durch Wahl der geeigneten Füllstoffe und Vernetzer kann vom Fachmann eine optimale Kohäsion erreicht werden. Diese sollte im Baubereich bei 70°C noch ausreichend sein. Der Fachmann kann hierbei die optimale Kohäsion durch entsprechende Abstimmung der Kettenlänge des mindestens einen Harzes, die Menge und Qualität der Füllstoffe und Vernetzer abstimmen. Da die Kohäsionsoptimierung immer im Widerstreit mit der Adhäsion steht, muss die Kohäsion so gewählt werden, dass sie nicht höher eingestellt wird, als die Adhäsion es zulässt.

Die Additive liegen in einer Menge von 0 bis 80 Gew.-%, insbesondere von 10 bis 70 Gew.-%, am meisten bevorzugt von 30 bis 60 Gew.-% vor, jeweils bezogen auf den Kleb- und Dichtstoff.

Die Viskosität des Kleb- und Dichtstoffs beträgt in der Regel zwischen 20 Pa · s und 50 Pa · s bei 20 °C, vorzugsweise zwischen 30 Pa · s und 40 Pa · s. Die Obergrenze der Viskosität wird dadurch bestimmt, dass der Kleb- und Dichtstoff noch handhabbar ist.

Die geeignete Viskosität kann vom Fachmann im Rahmen fachüblicher Versuche durch Verwendung der oben genannten Rheologie-Modifikatoren und/oder der anderen oben genannten Additive eingestellt werden. Rheologie-Modifikatoren können auch zugesetzt werden, um die Handhabung des Kleb- und Dichtstoffes zu erleichtern. Mit Hilfe von Rheologie-Modifikatoren, wie beispielsweise Verdickern oder Thixotropiermitteln, wird ein standfester, fließfähiger Kleb- und Dichtstoff erhalten, der sich leicht einer Kartusche oder einem Kunststoffbeutel herauspressen und verarbeiten lässt. Gleichzeitig erhöhen diese Modifikatoren die Sofortfestigkeit, wodurch der Kleb- und Dichtstoff das Gewicht z. B. eines Polyolefinmaterials tragen kann.

Eine Repulsion des Kleb- und Dichtstoffes auf dem abzudichtenden Material kann wiederum durch eine Erhöhung der Viskosität mit Verdickern verhindert werden.

Zur erfindungsgemäßen Anwendung kann der Kleb- und Dichtstoff beispielsweise mittels einer Presspistole aus einer Kartusche oder einem Kunststoffbeutel gepresst werden.

Der Kleb- und Dichtstoff kann in einem Temperaturbereich von 1 bis 60°C verarbeitet werden. Die bevorzugte Verarbeitungstemperatur beträgt 5 bis 50°C. Im gehärteten Zustand erfüllt der Kleb- und Dichtstoff seine Funktion in einem Temperaturbereich von-20 bis +80°C.

Da der erfindungsgemäße Kleb- und Dichtstoff auf fast allen Materialien, beispielsweise Polyolefinen, Papieren, Vliesen, Polyamiden und Polyestern, haftet, kann er überall dort angewendet werden, wo solche Materialien, insbesondere Polyolefin-Materialien, Verwendung finden. Insbesondere findet der erfindungsgemäße Kleb- und Dichtstoff Verwendung im Baubereich, bei Profilen oder bei Sockelleisten. Eine besonders bevorzugte Anwendung im Baubereich ist im Dachbereich das Anschließen eines Polyolefin-Materials an einen festen Untergrund, zum Beispiel an eine Wand aus Holz, Beton, Putz, Kalkstein, Ziegelstein oder Beton. Geeignete Polyolefin-Materialien sind beispielsweise Folien, Kabel, Fasern und Spritzgussteile.

Darüber hinaus haftet der erfindungsgemäße Kleb- und Dichtstoff auch in sehr feuchten Räumen bzw. unter Wasser auf nicht saugenden Oberflächen. Daher ist er auch geeignet, verschiedenste Materialien beispielsweise Polyolefin-Materialien unter Wasser oder bei extrem hoher Luftfeuchtigkeit beispielsweise auf Fliesen zu verkleben.

Die vollständige Offenbarung aller vor- und nachstehend aufgeführten Anmeldungen, Patente und Veröffentlichungen sind durch Bezugnahme in diese Anmeldung eingeführt.

Auch ohne weitere Ausführungen wird davon ausgegangen, dass ein Fachmann die obige Beschreibung im weitesten Umfang nutzen kann. Die bevorzugten Ausführungsformen und Beispiele sind deswegen lediglich als beschreibende, keineswegs als in irgendeiner Weise limitierende Offenbarung aufzufassen.

### Beispiele

### Herstellung der Formulierungen:

Harz und Prepolymer werden bei Raumtemperatur miteinander vermischt. Anschließend werden der Füllstoff, der/die Vernetzer und die ggf. weiteren Komponenten untergemischt; wird ein Wachs (z.B. Crayvallac Super) zugegeben, so geschieht dies bei erhöhter Temperatur (ca. 60°C). Abschließend wird die Formulierung unter Vakuum vermischt und abgefüllt.

Aus folgenden Komponenten wird gemäß der allgemeinen Vorschrift jeweils eine Formulierung hergestellt:

| Formulierung 1: | | |
|---|---|---|
| | **Bezugsquellen** | **Gew.%** |
| AC Resin DS 3500 | BASF AG | 43,996 |
| Polymer ST 61 XP2 / 1152 | Hanse Chemie AG | 9,998 |
| Glaskugeln 3M S22 | | 1,0 |
| Quarzmehl M3000 | | 39,996 |
| Ultramarinblau UB FU 73 | | 0,01 |
| Crayvallac Super | | 3,0 |
| Silan A1100 / AMEO/KBE-903 | GE Advanced Materials | 2,0 |

| Formulierung 2: | | |
|---|---|---|
| | **Bezugsquellen** | **Gew.%** |
| Acronal 4F | BASF AG | 40,0 |
| MS Polymer MSX 400 | Kaneka Belgium N.V. | 14,9 |
| Kreide Omya BLP3 | | 40,0 |
| Crayvallac Super | | 2,0 |
| Silan A1100 / AMEO/KBE-903 | GE Advanced Materials | 1,0 |
| Silan VTMO | | 2,0 |
| Katalysator DBTL | | 0,1 |

| Formulierung 3: | | |
|---|---|---|
| | **Bezugsquellen** | **Gew.%** |
| AC Resin DS 3500 | BASF AG | 39,99 |
| Polymer ST 65 | Hanse Chemie AG | 10,0 |
| Kreide Omya BLP3 | | 45,0 |
| Ultramarinblau | | 0,01 |
| Crayvallac Super | | 3,0 |
| Silan A1100 / AMEO | GE Advanced Materials | 2,0 |

| Formulierung 4: | | |
|---|---|---|
| | **Bezugsquellen** | **Gew.%** |
| AC Resin DS 3500 | BASF AG | 70,0 |
| Polymer ST 61 | Hanse Chemie AG | 13,0 |
| Acrosil R972 | | 15,0 |
| Silan A1100 / AMEO | GE Advanced Materials | 2,0 |

## Patentansprüche

1. Verwendung eines Kleb- und Dichtstoffes auf der Basis von mindestens einem Harz, das im Wesentlichen frei von Lösungsmitteln und Wasser ist, wobei das mindestens eine Harz ein Acryl-, Alkyd-, Epoxidpolymer, Polyurethan, Polyvinylacatat, Polybuten, Polyisobuten und/oder ein hydroxyliertes Polyesterharz ist,
und mindestens einem durch Feuchtigkeitseinwirkung aushärtenden Prepolymer mit durch Feuchtigkeit vernetzungsfähigen Gruppen, das silylterminiert ist,
wobei das mindestens eine Prepolymer ausgewählt ist aus der Gruppe Polyurethan-Prepolymere, Polyethcr-Prepolymere, Polyolefin-Prepolymere, Polybutadien-Prepolymere, Polyisopren-Prepolymere, Poly-Styrol-Butadien-Prepolymere, Polychloropren-Prepolymere, Poly-Acrylnitril-Butadien-Prepolymere, Polysilikon-Prepolymere und thermoplastische Elastomer-Prepolymere, die ohne Vulkanisation durch Spritzguss geformt werden können,
zum Verkleben von Kunststoffen, Holz, Papier, Pappe, Tapeten, Leder, Filz, Kork, Textilien und/oder Metallen.

2. Verwendung nach Anspruch 1,
**dadurch gekennzeichnet,**
**dass** es sich bei dem zu verklebenden Kunststoff um Folien und/oder Polyolefin-Materialien handelt.

3. Verwendung nach Anspruch 1 oder 2,
**dadurch gekennzeichnet,**
**dass** der Kleb- und Dichtstoff auf nicht saugenden Untergründen unter Wasser oder in sehr feuchten Räumen verwendet wird.

4. Verwendung nach einem der Ansprüche 1 bis 3,
**dadurch gekennzeichnet,**
**dass** der Kleb- und Dichtstoff einen Gehalt von 1 bis 40 Gew.-% des mindestens einen Prepolymers aufweist.

5. Verwendung nach Anspruch 4,
**dadurch gekennzeichnet,**
**dass** der Kleb- und Dichtstoff einen Gehalt von 5 bis 15 Gew.-% des mindestens einen Prepolymers aufweist.

6. Verwendung nach einem der Ansprüche 1 bis 5
**dadurch gekennzeichnet,**
**dass** das mindestens eine Acrylpolymer des Kleb- und Dichtstoffs ausgewählt ist aus der Gruppe Polyacrylate und Polymcthacrylate.

7. Verwendung nach einem der Ansprüche 1 bis 6,
**dadurch gekennzeichnet,**
**dass** der Kleb- und Dichtstoff einen Gehalt von 10 bis 80 Gew.-% des mindestens einen Harzes aufweist.

8. Verwendung nach Anspruch 7,
**dadurch gekennzeichnet,**
**dass** der Kleb- und Dichtstoff einen Gehalt von 20 bis 80 Gew.% des mindestens einen Harzes aufweist.

9. Verwendung nach einem der Ansprüche 1 bis 8,
**dadurch gekennzeichnet,**
**dass** der Kleb- und Dichtstoff einen Vernetzer und/oder einen Härter enthält, der mit Umgebungsfeuchte den Kleb- und Dichtstoff aushärtet.

10. Verwendung nach Anspruch 9,
**dadurch gekennzeichnet,**
**dass** der Kleb- und Dichtstoff als Vernetzer und/oder Härter ein Aminosilan enthält.

11. Verwendung nach einem der Ansprüche 1 bis 10,
**dadurch gekennzeichnet,**
**dass** der Kleb- und Dichtstoff einen oder mehrere Zusatzstoffe enthält.

12. Verwendung nach Anspruch 11,
**dadurch gekennzeichnet,**
**dass** der Kleb- und Dichtstoff als Zusatzstoff mindestens einen anorganischen Füllstoff und/oder mindestens einen organischen Füllstoff enthält.

13. Verwendung nach Anspruch 12,
**dadurch gekennzeichnet,**
**dass** der Kleb- und Dichtstoff als anorganischen Füllstoff Quarzmehl enthält.

14. Verwendung nach Anspruch 11,
**dadurch gekennzeichnet,**
**dass** der Kleb- und Dichtstoff als Zusatzstoff mindestens einen Vernetzter und/oder mindestens einen Farbstoff und/oder mindestens einen Weichmacher enthält.

## Claims

1. The use of an adhesive and sealant based on at least one resin, which is essentially free of solvent and water, said at least one resin being an acrylic resin, alkyd resin, epoxide polymer, polyurethane, polyvinylacetate, polybutene, polyisobutene and/or a hydroxylated polyester resin,
and at least one prepolymer, which cures through the action of moisture, has groups that can be crosslinked by moisture, and is silyl-terminated,
said at least one prepolymer being selected from the group of polyurethane prepolymers, polyether prepolymers, polyolefin prepolymers, polybutadiene prepolymers, polyisoprene prepolymers, poly(styrenebutadiene) prepolymers, polychloroprene prepolymers, poly(acrylonitrile-butadiene) prepolymers, polysilicone prepolymers, and thermoplastic elastomer prepolymers, which can be molded by injection molding without curing,
for bonding plastic materials, wood, paper, paperboard, wallpaper, leather, felt, cork, textiles and/or metals.

2. The use according to claim 1,
**characterized in that**
the plastic material to be bonded is films and/or polyolefin materials.

3. The use according to claim 1 or claim 2,
**characterized in that**
said adhesive and sealant is used on non-absorbent surfaces underwater or in rooms with very high moisture content.

4. The use according to any one of claims 1 to 3,
**characterized in that**
said adhesive and sealant has a content of the at least one prepolymer of 1 to 40% by weight.

5. The use according to claim 4,
**characterized in that**
said adhesive and sealant has a content of the at least one prepolymer of 5 to 15% by weight.

6. The use according to any one of claims 1 to 5,
**characterized in that**
the at least one acrylic polymer of said adhesive and sealant is selected from the group of polyacrylates and polymethacrylates.

7. The use according to any one of claims 1 to 6,
**characterized in that**
said adhesive and sealant has a content of the at least one resin of 10 to 80% by weight.

8. The use according to claim 7,
**characterized in that**
said adhesive and sealant has a content of the at least one resin of 20 to 80% by weight.

9. The use according to any one of claims 1 to 8,
**characterized in that**
said adhesive and sealant comprises a crosslinking agent and/or curing agent, which cures the adhesive and sealant by means of ambient moisture.

10. The use according to claim 9,
**characterized in that**
said adhesive and sealant comprises an aminosilane as crosslinking agent and/or curing agent.

11. The use according to any one of claims 1 to 10,
**characterized in that**
said adhesive and sealant comprises one or ore additives.

12. The use according to claim 11,
**characterized in that**
said adhesive and sealant comprises at least one inorganic filler and/or at least one organic filler as additive.

13. The use according to claim 12,
**characterized in that**
said adhesive and sealant comprises silica flour as inorganic filler.

14. The use according to claim 11,
**characterized in that**
said adhesive and sealant comprises at least one crosslinking agent and/or at least one dye and/or at least one plasticizer as additive.

## Revendications

1. Utilisation d'un agent d'adhésion et d'étanchéité à base d'au moins une résine essentiellement exempte de solvants et d'eau, l'au moins une résine étant un polymère d'acryle, d'alkyde, d'époxyde, du polyuréthane, de l'acétate de polyvinyle, du polybutène, du polyisobutène et/ou une résine de polyester hydroxylée,
et d'au moins un prépolymère durcissant sous l'effet de l'humidité, pourvu de groupements pouvant être réticulés par l'humidité et de groupements silyle terminaux,
l'au moins un prépolymère étant choisi dans le groupe des prépolymères de polyuréthanes, des prépolymères de polyéthers, des prépolymères de polyoléfines, des prépolymères de polybutadiènes, des prépolymères de polyisoprènes, des prépolymères de poly-styrène-butadiène, des prépolymères de polychloroprènes, des prépolymères de poly-acrylonitrile-butadiène, des prépolymères de polysilicones et des prépolymères d'elastomères thermoplastiques pouvant être mis en forme sans vulcanisation par moulage par injection,
pour le collage de matières plastiques, de bois, de papier, de carton, de papiers peints, de cuir, de feutre, de liège, de textiles et/ou de métaux.

2. Utilisation selon la revendication 1,
**caractérisée en ce que**
la matière plastique à coller est constituée par des feuilles et/ou par des matériaux en polyoléfine.

3. Utilisation selon les revendications 1 ou 2,
**caractérisée en ce que**
ledit agent d'adhésion et d'étanchéité est utilisé sur des substrats non absorbants situés sous l'eau ou dans des espaces très humides.

4. Utilisation selon l'une des revendications 1 à 3,
**caractérisée en ce que**
la teneur dudit agent d'adhésion et d'étanchéité en l'au moins un prépolymère est comprise entre 1 et 40 % en poids.

5. Utilisation selon la revendication 4,
**caractérisée en ce que**
la teneur dudit agent d'adhésion et d'étanchéité en l'au moins un prépolymère est comprise entre 5 et 15 % en poids.

6. Utilisation selon l'une des revendications 1 à 5,
**caractérisée en ce que**
l'au moins un polymère d'acryle dudit agent d'adhésion et d'étanchéité est choisi dans le groupe des polyacrylates et des polyméthacrylates.

7. Utilisation selon l'une des revendications 1 à 6,
**caractérisée en ce que**
la teneur dudit agent d'adhésion et d'étanchéité en l'au moins une résine est comprise entre 10 et 80 % en poids.

8. Utilisation selon la revendication 7,
**caractérisée en ce que**
la teneur dudit agent d'adhésion et d'étanchéité en l'au moins une résine est comprise entre 20 et 80 % en poids.

9. Utilisation selon l'une des revendications 1 à 8,
**caractérisée en ce que**
ledit agent d'adhésion et d'étanchéité contient un agent de réticulation et/ou un agent de durcissement provoquant le durcissement de l'agent d'adhésion et d'étanchéité lorsqu'il est exposé à l'humidité environnante.

10. Utilisation selon la revendication 9,
**caractérisée en ce que**
ledit agent d'adhésion et d'étanchéité contient, en tant qu'agent de réticulation et/ou agent de durcissement, un aminosilane.

11. Utilisation selon l'une des revendications 1 à 10,
**caractérisée en ce que**
ledit agent d'adhésion et d'étanchéité contient un ou plusieurs additifs.

12. Utilisation selon la revendication 11,
**caractérisée en ce que**
ledit agent d'adhésion et d'étanchéité contient, en tant qu'additif, au moins une charge inorganique et/ou au moins une charge organique.

13. Utilisation selon la revendication 12,
**caractérisée en ce que**
ledit agent d'adhésion et d'étanchéité contient, en tant que charge inorganique, de la poudre de quartz.

14. Utilisation selon la revendication 11,
**caractérisée en ce que**
ledit agent d'adhésion et d'étanchéité contient, en tant qu'additif, au moins un agent de réticulation et/ou au moins un colorant et/ou au moins un plastifiant.
